# EUROPEAN PATENT SPECIFICATION

(11) **EP 2 447 523 B1**
(45) Date of publication and mention of the grant of the patent: **11.12.2019**
(21) Application number: 11184871.9
(22) Date of filing: 12.10.2011
(51) Int. Cl.: F03D 1/06

(54) **Wind power generator**
Windgenerator
Éolienne

(30) Priority: 29.10.2010 JP 2010243064
(43) Date of publication of application: 02.05.2012
(73) Proprietor: Hitachi, Ltd., Chiyoda-ku Tokyo 100-8280 (JP)
(72) Inventor: Yoshida, Shigeo, Tokyo, 160-8316 (JP); Tobinaga, Ikuo, Tokyo, 160-8316 (JP)
(74) Representative: MERH-IP Matias Erny Reichl Hoffmann Patentanwälte PartG mbB

(56) References cited:
- EP-A2- 2 141 355
- DE-A1-102006 041 383
- DE-A1-102009 025 927
- JP-A- 59 147 879

## Description

### FIELD OF THE INVENTION

The present invention relates to a downwind type wind power generator in which the rotor is located on the downwind side of the nacelle, and more particularly to a downwind type wind power generator in which the entire length of the nacelle is shortened.

### BACKGROUND OF THE INVENTION

A wind power generator generates electrical power by a rotor driving a generator that is housed inside a nacelle that is located on the top of a tower,

As such a wind power generator, there is an upwind type, in which the rotor is located on the upwind side of the nacelle during normal use, and a downwind type, in which the rotor is located on the downwind side of the nacelle.

A downwind type wind power generator is known to have excellent power generation performance in the blowing wind, and excellent safety during standby conditions under high wind.

For example, Japanese Laid-open Patent Publication JP-A-S59-147 879 discloses such a downwind type wind power generator.
During the operation, bending occurs in the blades of a wind power generator due to the force of the wind.

In this kind of situation as well, a wind power generator must be designed so that the blades do not interfere with the other parts such as the tower.

In regards to the blades for a wind power generator, the use of pre-bent blades, in which the tip section of the blades are bent toward the upwind side, have been proposed in order that clearance between the tower and the blades is sufficiently maintained even when the blades of the wind power generator are bent by the force of the wind.

DE 10 2006 041383 A1 describes a wind-power plant that has rotor blades connected with a rotor hub by a bolt connection.

JP 59 147 879 A describes a blade having a streamlined circumferential side which is fixed rotatably through ball bearings at upper and lower ends to the portion of support facing with the blade of a wind force turbine.

EP 2 141355 A2 describes a blade for a wind turbine that includes a chord plane having one spanwise portion with a first curvature and another spanwise portion with a second curvature that Is different from the first curvature.

DE 10 2009 025 927 A1 describes that a wind turbine system Includes a stator and a rotor. The rotor blade tips are offset by a margin in an upstream direction relative to the plane of rotation.

For example, Japanese Laid-open Patent Pubblication JP-A-2009-156 260 discloses an upwind type wind power generator that considers pre-bending of the blades. However, there is no mention or suggestion of applying pre-bent blades to a downwind type wind power generator in which the blades and tower do not normally come close to each other due to bending of the blades caused by the force of the wind.

### SUMMARY OF THE INVENTION

In this kind of downwind type wind power generator, it is necessary to sufficiently separate the installation location of the rotor from the tower in order that the rotor does not come in contact with the tower during operation.

However, conventionally in order to distance the location of the hub from the downwind side of the tower, it was necessary to lengthen the rotor overhang, which is the horizontal distance from the tower to the center of the rotation of the rotor. Therefore, the overall length of the nacelle became long, and thus the size and weight of the nacelle was also increased.

The object of the present invention is to provide a downwind type wind power generator that is capable of shortening the rotor overhang and making the nacelle more lightweight. The object is achieved by the invention according to claim 1.

According to a first embodiment of the present invention for achieving the purpose described above, there is provided
a wind power generator comprising:
a tower having a top end portion and a bottom end portion, the bottom end portion being fixed to a base;
a power generator main body supported by the top end portion side of the tower;
a rotor having a hub rotatably supported by the power generator main body, and a plurality of blades each of which extends radially from the rotor, wherein the rotor rotates when the blades receive wind; and
a power generator provided on the power generator main body and driven by a rotation of the rotor to generate electric power,
wherein the rotor is located on a downwind side relative to the power generator main body,
wherein each of the blades has a radial root end portion fixed to the hub, a radial tip end portion, and a middle section which extends between the radial root end portion and the radial tip end portion, and
wherein the middle section of each blade is curved such that in an unloaded state, the middle section overhangs toward the downwind side relative to an imaginary straight line that connects the root end portion and the tip end portion, and a portion which is adjacent to the radial root end of each blade is inclined toward the downwind side relative to an imaginary plane surface which is perpendicular to the rotational axis of the rotor.
With the present invention, the position of the hub can be located such that the hub is near the tower side while suitably maintaining clearance between the airfoil section of the blades and the tower. Moreover, it is possible to shorten the amount of rotor overhang, which is the distance in the horizontal direction between the center of the rotation of the rotor and the tower.

As a result, it is possible to reduce the weight of the nacelle, and to simplify the construction of the nacelle, the tower that supports the nacelle, and the like.
Other features and advantages of the present invention will become apparent from the following detailed description taken in conjunction with the accompanying drawings, which illustrate, by way of example, the principles of the invention.

### BRIEF DESCRIPTION OF THE DRAWINGS

- FIG. 1: is a schematic side view of a wind power generator to which the present invention is applied.
- FIG. 2: is a schematic side view of a wind power generator, which is a comparative example to the present invention.

### DETAILED DESCRIPTION OF THE INVENTION

The object of the present invention is to solve the problem of providing a downwind type wind power generator that is capable of shortening the overall length of the nacelle. In order to solve this problem, in the present invention, pre-bent blades, the end sections of which are bent toward the tower side, are mounted at a specified coning angle. By shortening the rotor overhang while maintaining clearance between the passing position of the blades and the tower in this way, the present invention is able to solve the problem described above.

### EMBODIMENT

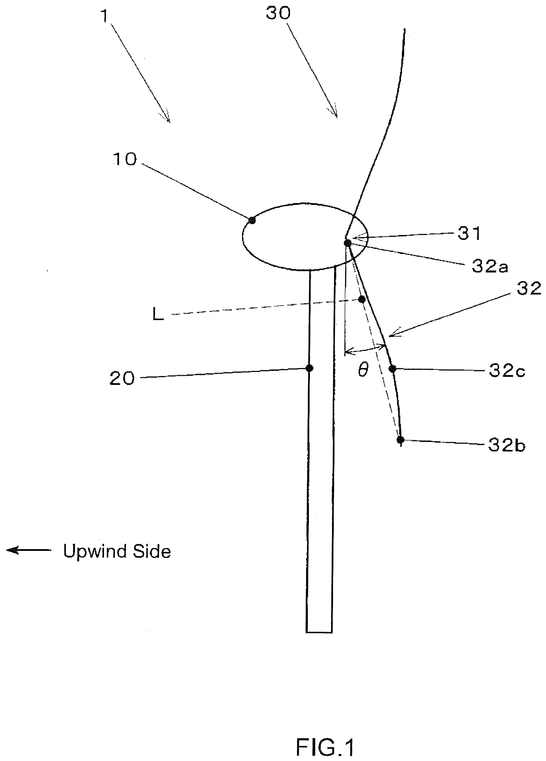

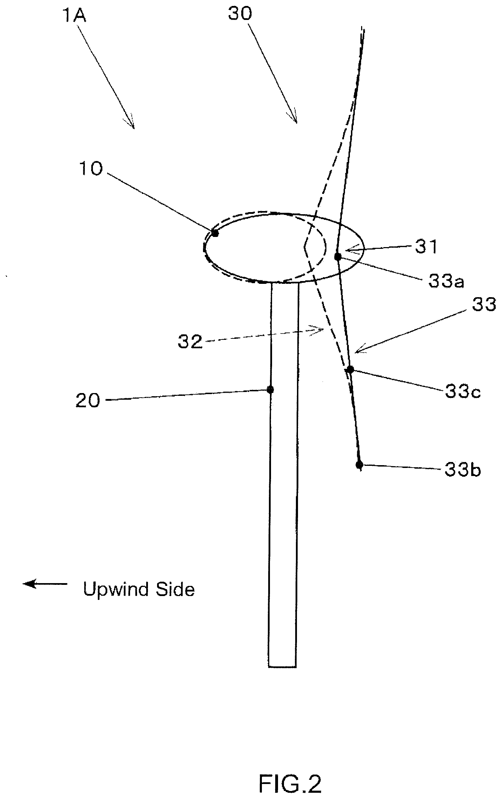

In the following, an embodiment of a wind power generator to which the present invention is applied is explained. FIG. 1 is a schematic side view of an embodiment of a wind power generator to which the present invention is applied, and illustrates the state as seen in the horizontal direction that is orthogonal to the wind direction during normal operation (this is the same in FIG. 2 described later).

The wind power generator 1 comprises a nacelle 10, a tower 20 and a rotor 30.

The nacelle 10 is the portion that houses a generator, transformer, control panel, lubrication equipment, cooling equipment and the like (which are not illustrated in the drawings). Moreover, as necessary a step-up gear, which increases the speed of rotation of the rotor 30 and transmits that rotational speed to the generator, is provided in the nacelle 10.

The nacelle 10 has a nacelle frame (not illustrated in the drawing) on which the devices and equipment above are mounted, and the nacelle 10 is formed by covering this nacelle frame with a cover.

The tower 20 is for supporting the nacelle 10 at a high location. The tower 20 is formed as a nearly column shaped post that extends in the vertical direction. The bottom end section of the tower 20 is fastened to a base section (not illustrated in the drawings) that is provided on the ground, at the bottom of the ocean or on the ocean.

The top end section of the tower 20 is connected to the bottom section of the nacelle 10.

The nacelle 10 is attached to the tower 20 so that it can rotate in the yaw direction.

The rotor 30 is a wind turbine that rotates by receiving the force of the wind, and is for driving the generator in the nacelle 10.

The rotor 30 comprises a hub 31, blades 32 and the like.

The hub 31 is supported by the nacelle 10 such that it can rotate, and is connected to the main shaft of the generator.

A plurality of blades 32 are provided such that they extend in a radial shape from the hub 31, and they form the blade section.

The blades 32 have an airfoil shape that generates lift in a direction that causes the rotor 30 to rotate due the flow of air over them, and they are attached to the hub 31 such that the pitch angle of the blades 32 can be changed.
The blades 32 have a root end section 32a, a tip end section 32b and a middle section 32c.

The root end section 32a is a base section that is attached to the hub 31.

The tip end section 32b is the end section on the outer diameter side of the rotor 30.

The middle section 32c is the area of the blade 32 between the root end section 32a and the tip end section 32b.
As illustrated in FIG. 1, the blades 32, in a no-load state (state in which no thrust is generated), are pre-bent into a curved shape so that the middle section 32c protrudes toward the downwind side during normal operation with respect to a straight line L that connects the root end section 32a and the tip end section 32b.

In other words, the area near the tip end section 32b of the blades 32 is formed so that it is curved toward the tower side. Table 1 illustrates an example of the relationship between the radius of the blades 32 from the center of rotation of the rotor 30 and the pre-bent angle and pre-bent amount.

**TABLE 1**

| Radius [m] | Pre-bent angle [degrees] | Pre-bent amount [m] |
|---|---|---|
| 0 | 0.0 | 0.00 |
| 2 | 0.1 | 0.00 |
| 4 | 0.3 | 0.00 |
| 6 | 0.4 | 0.01 |
| 8 | 0.5 | 0.03 |
| 10 | 0.6 | 0.04 |
| 12 | 0.8 | 0.07 |
| 14 | 0.9 | 0.09 |
| 16 | 1.0 | 0.12 |
| 18 | 1.1 | 0.16 |
| 20 | 1.3 | 0.20 |
| 22 | 1.4 | 0.24 |
| 24 | 1.5 | 0.29 |
| 26 | 1.6 | 0.34 |
| 28 | 1.8 | 0.40 |
| 30 | 1.9 | 0.46 |
| 32 | 2.0 | 0.52 |
| 34 | 2.1 | 0.59 |
| 36 | 2.3 | 0.67 |
| 38 | 2.4 | 0.75 |
| 40 | 2.5 | 0.83 |

Moreover, in the area near the root end section 32a of the blades 32, a coning angle θ, which is sloped with respect to a plane that is orthogonal to the center axis of rotation of the rotor 30 so that the blade is located further toward the downwind side going in the direction toward the outer diameter side from the hub 31, is applied.

This coning angle θ is set such that it is larger than the coning angle in a typical downwind type wind power generator.
In the following, the results of the embodiment described above will be explained in comparison with a comparative example of the present invention that will be explained below.

For the comparative example, the same reference numbers will be used for parts that are essentially the same as in the embodiment described above, and an explanation of those parts will be omitted, with mainly the differences being explained below.

FIG. 2 is a schematic side view of a comparative example of a wind power generator, and in order for comparison, the wind power generator of the embodiment above is also illustrated using dashed lines.
In the wind power generator 1A of this comparative example, the blades 32 of the rotor 30 in the embodiment will be presumed to be as the blades 33 explained below.

The blades 33 in the no-load state are not pre-bent blades, and are such that the middle section 33c of the blade is nearly on a straight line that connects the root end section 33a and the tip end section 33b.
In downwind type wind power generators such as in the embodiment and comparative example, the blades 32, 33 are such that when thrust occurs, the tip end sections 32b, 33b bend toward the downwind side, or in other words, in the direction away from the tower 20. However, when taking into consideration the case where the tip end sections 32b, 33b displace toward the upwind side due to the occurrence of bending vibration, it is necessary to maintain sufficient clearance between the tower 20 and the blades 32, 33.

Therefore, in the comparative example, the nacelle 10 extends further toward the downwind side than the tower 20, and the hub 31 of a rotor 30 having blades 33 that are not pre-bent is attached to the base thereof. In other words, the rotor overhang is relatively large, which results in the problem of a large and heavy nacelle 10.
On the other hand, with the embodiment above, the blades 32 are pre-bent such that the tip end section 32b curves toward the tower 20 side. Furthermore, the blades 32 are attached to the hub 31 with a coning angle being applied to the root end section 32a. Therefore, the position, where there is a problem with interference with the tower 20 when the tip end section 32b passes through, is separated from the tower 20. Also, it is possible to locate the hub 31 further on the tower 20 side (upwind side) than in the comparative example while maintaining the necessary clearance to prevent interference. In other words, it is possible to shorten the rotor overhang, and shorten the portion of the nacelle 10 that extends toward the downwind side from the tower 20.

As a result, it is possible to make the nacelle 10 more compact and lightweight; and in doing so, it also becomes possible to simplify the construction of the tower 20 and the like.

For example, in the case of the embodiment above, when the radius of the rotor 30 is 40 m, for example, by shortening the rotor overhang by 830 m, it is possible to shorten the horizontal distance from the center of the tower 20 to the center of the hub 31 from approximately 3.4 m to approximately 2.6 m.

According to estimation by the inventors, when the rotor overhang is shortened 10%, it is possible to reduce the overall weight of the nacelle by approximately 10%. Therefore, with the embodiment above, the weight of the nacelle 10 can be reduced by 20% or more, and it is possible to simplify the construction of the nacelle 10, tower 20 and the like.

### VARIATION

The present invention is not limited to the embodiment explained above, and various variations and modifications are possible, with these also being within the technical scope of the present invention.
(1) The amount of pre-bending and the angle of the blades in the embodiment above are just an example, and can be appropriately changed according to the size of the wind power generator, the construction of the parts other than the rotor, and the like.
(2) The shape, construction, location and the like of the components of the wind power device are not limited to the construction of the embodiment above, and can be appropriately change. For example, in the embodiment above, the transformer, control panel and the like were mounted inside the nacelle, however, part or all of these could also be located inside the tower or the ground. Moreover, it is also possible to suitably set whether or not there is a step-up gear.
It is to be understood that the above-described embodiments are illustrative of only a few of the many possible specific embodiments that can represent applications of the principles of the invention.

### LIST OF REFERENCE SIGNS

- 1: wind power generator
- 1A: wind power generator
- 10: nacelle
- 20: tower
- 30: rotor
- 31: hub
- 32: blades
- 32a: root end section
- 32b: tip end section
- 32c: middle section
- 33: blades
- 33a: root end section
- 33b: tip end section
- 33c: middle section
- θ: coning angle

## Claims

1. A wind power generator comprising:
- a tower (20) having a top end portion and a bottom end portion, the bottom end portion being fixed to a base;
- a power generator main body (10) supported by the top end portion side of the tower (20);
- a rotor (30) having a hub rotatably supported by the power generator main body (10), and a plurality of blades (32) each of which extends radially from the rotor (30), wherein the rotor (30) rotates when the blades (32) receive wind;
- a power generator provided on the power generator main body (10) and driven by a rotation of the rotor (30) to generate electric power; and
- a portion which is adjacent to the radial root end (32a) of each blade (32) is inclined toward the downwind side relative to an imaginary plane surface which is perpendicular to the rotational axis of the rotor (30) so that the blades (32) are attached to the hub (31) with a coning angle (θ),
- wherein the rotor (30) is located on a downwind side relative to the power generator main body (10),
- wherein each of the blades (32) has a radial root end portion fixed to the hub (31), a radial tip end portion (32b), and a middle section (32c) which extends between the radial root end portion and the radial tip end portion(32b),
**characterized in that**
- the middle section (32c) of each blade (32) is curved such that in an unloaded state, the middle section (32c) protrudes toward the downwind side relative to an imaginary straight line that connects the root end portion (32a) and the tip end portion (32b).

## Patentansprüche

1. Windkraftgenerator, der Folgendes umfasst:
- einen Turm (20), der einen oberen Endabschnitt und einen unteren Endabschnitt besitzt, wobei der untere Endabschnitt an einer Basis befestigt ist;
- einen Leistungsgeneratorhauptkörper (10), der durch die obere Endabschnittsseite des Turms (20) getragen wird;
- einen Rotor (30), der eine Nabe, die durch den Leistungsgeneratorhauptkörper (10) drehbar getragen wird, und mehrere Rotorblätter (32), wovon sich jedes radial vom Rotor (30) erstreckt, besitzt, wobei sich der Rotor (30) dreht, wenn die Rotorblätter (32) Wind aufnehmen; und
- einen Leistungsgenerator, der auf dem Leistungsgeneratorhauptkörper (10) vorgesehen ist und durch eine Rotation des Rotors (30) angetrieben wird, um elektrische Leistung zu erzeugen; wobei
- ein Abschnitt, der an das radiale Wurzelende (32a) jedes Rotorblatts (32) angrenzt, zur windabgewandten Seite in Bezug auf eine imaginäre ebene Fläche, die zur Drehachse des Rotors (30) senkrecht ist, derart geneigt ist, dass die Rotorblätter (32) unter einem Kegelwinkel (θ) an der Nabe (31) angebracht sind,
der Rotor (30) sich auf einer windabgewandten Seite in Bezug auf den Leistungsgeneratorhauptkörper (10) befindet und
- jedes Rotorblatt (32) einen radialen Wurzelendabschnitt, der an der Nabe (31) befestigt ist, einen radialen Kopfendabschnitt (32b) und einen Mittelabschnitt (32c), der zwischen dem radialen Wurzelendabschnitt und dem radialen Kopfendabschnitt (32b) verläuft, besitzt,
**dadurch gekennzeichnet, dass**
- der Mittelabschnitt (32c) jedes Rotorblatts (32) derart gekrümmt ist, dass der Mittelabschnitt (32c) in einem unbelasteten Zustand in Bezug auf eine imaginäre Gerade, die den Wurzelendabschnitt (32a) und den Kopfendabschnitt (32b) verbindet, zur windabgewandten Seite vorsteht.

## Revendications

1. Générateur d'énergie éolienne comprenant :
- un mât (20) ayant une portion d'extrémité supérieure et une portion d'extrémité de fond, la portion d'extrémité de fond étant fixée à un socle ;
- un corps principal de générateur d'énergie (10) supporté par le côté de la portion d'extrémité supérieure du mât (20) ;
- un rotor (30) ayant un moyeu supporté en rotation par le corps principal de générateur d'énergie (10), et une pluralité de pales (32), chacune s'étendant radialement depuis le rotor (30), dans lequel le rotor (30) tourne quand les pales (32) reçoivent le vent ;
- un générateur d'énergie prévu sur le corps principal de générateur d'énergie (10) et entraîné par une rotation du rotor (30) pour générer de l'énergie électrique ; et
- une portion, qui est adjacente à l'extrémité de base radiale (32a) de chaque pale (32), inclinée vers le côté sous le vent par rapport à une surface plane imaginaire qui est perpendiculaire à l'axe de rotation du rotor (30) de sorte que les pales (32) sont attachées au moyeu (31) avec un angle (θ) en formant un cône,
- dans lequel le rotor (30) est situé sur un côté sous le vent par rapport au corps principal de générateur d'énergie (10),
- dans lequel chacune des pales (32) a une portion d'extrémité de base radiale fixée au moyeu (31), une portion d'extrémité de pointe radiale (32b) et une section médiane (32c) qui s'étend entre la portion d'extrémité de base radiale et la portion d'extrémité de pointe radiale (32b),
**caractérisé en ce que**
- la section médiane (32c) de chaque pale (32) est incurvée de sorte que, dans un état non chargé, la section médiane (32c) se projette vers le côté sous le vent par rapport à une ligne droite imaginaire qui connecte la portion d'extrémité de base (32a) et la portion d'extrémité de pointe (32b).
